# EUROPÄISCHE PATENTSCHRIFT

(11) **EP 1 712 415 B1**
(45) Veröffentlichungstag und Bekanntmachung des Hinweises auf die Patenterteilung: **16.01.2008**
(21) Anmeldenummer: 06007245.1
(22) Anmeldetag: 06.04.2006
(51) Int. Cl.: B60Q 1/04

(54) **Kraftfahrzeug mit einer in Normalposition kräftefreien und erst in einer Crashposition eine Haltewirkung ausübenden Haltevorrichtung für einen Scheinwerfer, sowie Scheinwerfer hierfür**
Vehicle having a normal position in which a holding device for a headlight is force-free and a crash position in which said holding device exerts a holding force, and a headlight for such a vehicle
Véhicule comportant une position normale dans quel un dispositif de fixation pour un phare exige une force nulle et une position crash dans quel le dispositif de fixation exige une force du support, et phare pour ce type de véhicule

(30) Priorität: 11.04.2005 DE 102005016457
(43) Veröffentlichungstag der Anmeldung: 18.10.2006
(73) Patentinhaber: GM Global Technology Operations, Inc., Detroit, MI 48265-3000 (US)
(72) Erfinder: Enderich, Thomas, 65510 Hünstetten (DE); Vollhardt, Jürgen, 65428 Rüsselsheim (DE); Wanke, Thomas, 55239 Gau-Odernheim (DE)
(74) Vertreter: Daniel, Ulrich W.P.

(56) Entgegenhaltungen:
- EP-A- 1 431 116
- DE-A1- 3 802 104
- DE-B3- 10 237 454
- FR-A- 2 844 755
- US-A1- 2004 057 249

## Beschreibung

Die vorliegende Erfindung betrifft ein Kraftfahrzeug nach dem Oberbegriff des Anspruchs 1, sowie einen Scheinwerfer nach dem Oberbegriff des Anspruchs 9 wobei die Merkmale der jeweiligen Oberbegriffe beispielsweise aus DE-A-3 802 104 bekannt sind.

Aus der Praxis sind Kraftfahrzeuge bekannt, die mit verschiedenen Frontscheinwerferkonstruktionen ausgestattet sind. Hierzu sind unterschiedliche Ausführungsformen zur Befestigung der Scheinwerfer im Frontbereich des Kraftfahrzeugs im Einsatz. Bei diesen aus der Praxis bekannten Konstruktionen werden die Frontscheinwerfer üblicherweise an unterschiedlichen Punkten der Karosserie des Fahrzeugs befestigt.

Im Hause der selben Anmelderin werden dementsprechend die Scheinwerfer üblicherweise an drei Befestigungspunkten an der Karosserie angebracht. Normalerweise handelt es sich bei diesen Befestigungspunkten um folgende Karosseriestellen:
- den Kotflügelwasserkanal oder die Strebe für den Radeinbau,
- den Kotflügelhalter unten bzw. die Bumperschiene außen, oder
- die Front oben bzw. die Front seitlich.

Zur Befestigung des Scheinwerfers sind dabei entsprechende Laschen aus Kunststoff integral an den Scheinwerfern angespritzt. Diese Laschen werden an der Fahrzeugkarosserie, üblicherweise an den vorstehend bezeichneten Punkten, mittels Verschraubung befestigt.

Problematisch bei dieser Ausführung ist jedoch, dass die Laschen auf Grund der Verschraubung bei einer entsprechend starken Längs- und/oder Querlast brechen oder um den Schraubpunkt rotieren können. Entsprechend starke Querlasten können beispielsweise bei einem heftigen Parkrempler oder durch den bei einem Verkehrsunfall hervorgerufenen Aufprall auf die Laschen einwirken.

Ein weiteres Problem besteht darin, dass die herkömmliche Befestigungstechnik in Bezug auf erhöhte Fußgängerschutzanforderungen Nachteile aufweist. So ist bisher der Kotflügel des Fahrzeugs schubsteif mit der Strebe am Radeinbau verschraubt.

Um das Verletzungspotential für den Fußgänger bei einem Verkehrsunfall zu reduzieren, werden deshalb neuerdings die Kotflügel auch auf energieabsorbierenden Halteböcken verschraubt.

Beide Fahrzeugkonstruktionen weisen hierbei jedoch das gleiche Problem auf: Kommt es zu einem Zusammenstoß des Fahrzeugs mit einem Hindernis, beispielsweise mit einer Mauer oder einem Pfosten, so kommt es bereits bei niedriger Geschwindigkeit zu einer vergleichsweise starken Deformation.

Insbesondere wird dabei der Frontscheinwerfer stark nach hinten und nach außen gedrückt. Dadurch wird der Kotflügel beschädigt, oder er wird, wenn er auf energieabsorbierenden Halteböcken geschraubt ist, auf Grund der weicheren Aufhängung vorne nach außen und nach hinten dann unter die Vordertür des Fahrzeugs geschoben.

Derlei Folgen eines möglichen Unfalls verursachen einen erheblichen Reparaturaufwand. Denn bei einem Fahrzeug, das die vorstehend beschriebene Konstruktion aufweist, müssen nach einer Kollision, beispielsweise mit einer Mauer, der bzw. die verformten Kotflügel entweder ausgetauscht, oder entsprechend ausgerichtet werden. Zusätzlich zu einem Austausch oder einer entsprechenden Reparatur müssen die zudem entstandenen Lackschäden behoben werden. Dies führt zu einem hohen Kostenaufwand für die Reparatur.

Ferner führt der vorstehend erläuterte Effekt des beim Frontaufprall den Kotflügel verschiebenden Scheinwerfers dazu, dass ein solches Fahrzeug bei den Einstufungstests der Versicherungsgesellschaften schlecht abschneidet, da die AZT-Barriere, die üblicherweise zu Crashtests zur Einstufung eines Fahrzeugs in die jeweilige Versicherungsklasse verwendet wird, aus Gründen des Fußgängerschutzes verhältnismäßig weit in das Fahrzeug eindringen kann, wodurch der Scheinwerfer ungünstigerweise den Kotflügel wie vorstehend beschrieben verschiebt bzw. deformiert, und dabei zudem eine Beschädigung der Vordertür verursachen kann, beispielsweise durch das Verschieben des Kotflügels unter die Vordertür.

Daraus ermitteln die Versicherungen wiederum den zu erwartenden Reparaturaufwand, der bei einem derartigen Schadensbild, wie vorstehend beschrieben, relativ hoch ausfallen kann.

Aus der allgemein gängigen Versicherungspraxis bei Kfz-Versicherungen ist wiederum der Trend erkennbar, dass Fahrzeuge, welche im Versicherungsfall hohe Reparaturkosten nach sich ziehen, zudem eine teurere Versicherungseinstufung erfahren. Ungünstig eingestufte Fahrzeuge sind wiederum unwirtschaftlich und somit letzten Endes für den Käufer uninteressant.

Es ist deshalb Aufgabe der vorliegenden Erfindung, eine bekannte Konstruktion zur Scheinwerferbefestigung in einem Kraftfahrzeug derart zu verbessern, dass, unter Erfüllung der heute gültigen Anforderungen an den Fußgängerschutz, die Kosten für den Kraftfahrzeughalter gesenkt werden können, und somit ein insgesamt wirtschaftlicheres Fahrzeug angeboten werden kann.

Diese Aufgabe wird durch das Kraftfahrzeug mit den Merkmalen des Anspruchs 1, wie auch durch den Scheinwerfer mit den Merkmalen des Anspruchs 9 gelöst.

Dabei wird nach einem ersten Aspekt der Erfindung erstmals ein Kraftfahrzeug mit einem karosserietragenden Rahmen, Kraftfahrzeugverkleidungselementen, wie beispielsweise Kotflügel, sowie Kraftfahrzeugfunktionseinrichtungen, wie beispielsweise Scheinwerfer, vorgeschlagen, das ein Befestigungssystem für einen Frontscheinwerfer aufweist.

Erfindungsgemäß ist dieses Befestigungssystem dabei derart ausgebildet, dass es karosserieseitig und scheinwerferseitig Haltevorrichtungen aufweist, die in einer Normalposition wirkungsfrei zueinander ausgebildet sind und keine Haltewirkung ausüben, und die erst in einer zusammenstoßbedingten Crashposition miteinander interagieren bzw. miteinander in Eingriff gelangen, um eine Haltewirkung auszuüben. Die Normalposition entspricht dabei der ursprünglichen Einbauposition des Scheinwerfers im Kraftfahrzeug.

Durch die erfindungsgemäße Befestigungsvorrichtung für den Scheinwerfer wird dabei erstmals erreicht, dass im Falle eines Frontalaufpralls mit niedriger Geschwindigkeit, beispielsweise bei einem Parkrempler oder bei einem Zusammenstoß mit einer Mauer, der Scheinwerfer zwar mit Blick auf dessen Bewegungsrichtung wie gewohnt nach hinten und zur Seite gedrückt wird, dabei jedoch insgesamt eine deutliche Reduktion der Scheinwerferverschiebung erreicht wird. Zudem kann durch die Interaktion der Haltevorrichtungen eine Auswirkung der durch den Zusammenprall entstehenden Kraft auf den Kotflügel weitestgehend verhindert werden.

Ferner kann mit dem Befestigungssystem vorteilhaft verhindert werden, dass der Scheinwerfer bzw. die Verschraubung des Scheinwerfers bei einem Zusammenprall des Fahrzeugs mit einem Hindernis, beispielsweise einer Mauer, ausreißt, bzw. bricht.

Durch diese erfindungsgemäße Konstruktion kann damit, unter Erfüllung der Anforderungen an den Fußgängerschutz, eine Beschädigung des Kotflügels vorteilhaft verhindert werden, was zu deutlich niedrigeren Reparaturkosten, und somit zu einer günstigeren Versicherungseinstufung führt. Dadurch können die laufenden Fahrzeugkosten für den Kraftfahrzeughalter gesenkt werden, und es ist möglich, ein insgesamt wirtschaftlicheres Fahrzeug anzubieten.

Dadurch, dass die jeweiligen Haltevorrichtungen in der Normalposition wirkungsfrei zueinander ausgebildet sind, ist es vorteilhaft möglich, den Scheinwerfer, ohne zusätzlichen Kraftaufwand zur Überwindung eines Widerstandsmomentes zwischen den jeweiligen Haltevorrichtungen des Befestigungssystems, am Fahrzeug zu montieren.

Dies ist insbesondere auch dann von Vorteil, wenn der Scheinwerfer aus Reparaturgründen zur Instandsetzung oder zum Austausch ausgebaut werden muß und anschließend wieder eingesetzt wird.

Darüber hinaus können die erfindungsgemäßen Haltevorrichtungen an bereits vorhandenen Befestigungspunkten montiert werden. Damit entsteht kein Bedarf an zusätzlichen Befestigungspunkten. Dies unterstützt wiederum das Bestreben, ein insgesamt wirtschaftlicheres Fahrzeug anzubieten, da die Ausbildung zusätzlicher Befestigungspunkte einen erhöhten Arbeitsaufwand darstellen würde.

Vorteilhafte Weiterbildungen des erfindungsgemäßen Kraftfahrzeugs ergeben sich zudem aus den Merkmalen der Unteransprüche.

So kann in einer Ausführungsform die scheinwerferseitig ausgebildete Haltevorrichtung eine Fanglasche sein, wobei die Fanglasche vorzugsweise integral am Scheinwerfergehäuse ausgebildet sein kann. Die Ausbildung der Haltevorrichtung am Scheinwerfergehäuse ermöglicht es dabei vorteilhaft, dass die Fanglasche direkt bei der Herstellung des Scheinwerfergehäuses mit ausgebildet werden kann, wodurch ein zusätzlicher Arbeitsschritt zur Ausbildung der Fanglasche eingespart werden kann.

Ferner kann die karosserieseitig ausgebildete Haltevorrichtung eine Fangtasche sein, wobei die Fangtasche vorzugsweise seitlich an der Frontkarosserie angebracht ist. Diese Konstruktion erlaubt es, dass die Befestigungsvorrichtung der vorliegenden Erfindung mit einem relativ geringen Aufwand angebracht werden kann.

In einer weiter bevorzugten Ausführungsform sind die karosserieseitig ausgebildete Fangtasche und die scheinwerferseitig ausgebildete Fanglasche derart an dem Kraftfahrzeug ausgebildet, dass sie entlang einer Längsrichtung des Fahrzeugs angeordnet sind. Dadurch kann besonders vorteilhaft erreicht werden, dass eine einfache Anbringung der jeweiligen Halteelemente unter bestmöglicher Ausnutzung des vorhandenen Freiraums innerhalb des Fahrzeugs möglich ist.

Überdies besteht zwischen der Scheinwerferfangtasche und der Scheinwerferfanglasche in der Normalposition ein Freiraum, wodurch es vorteilhaft möglich ist, dass die Fanglasche und die Fangtasche leicht, d.h. ohne zusätzlichen Kraftaufwand, zueinander positioniert werden können. Zudem kann vorteilhaft gewährleistet werden, dass es während der Montage des Scheinwerfers am Fahrzeug nicht zu einem Klemmen oder zu Spannungen kommt.

Weiterhin kann das Befestigungssystem derart ausgebildet sein, dass der Freiraum zwischen den jeweiligen Haltevorrichtungen des Scheinwerfers und der Karosserie während eines Zusammenpralls des Fahrzeugs mit einem Hindernis, beispielsweise einer Mauer oder einem Pfosten, durch die Verschiebung des Scheinwerfers ins Fahrzeuginnere aufgebraucht wird, wodurch eine formschlüssige Verbindung zwischen der an der Karosserie ausgebildeten Fangtasche und der Fanglasche am Scheinwerfer entsteht, wobei durch die formschlüssige Verbindung eine Haltewirkung der jeweiligen Haltevorrichtungen ausgelöst wird.

Dadurch kann vorteilhaft erreicht werden, dass der Scheinwerfer bei einem Zusammenprall des Fahrzeugs, beispielsweise mit einer Mauer, nur so weit in das Fahrzeug eindringen kann, bis der vorhandene Zwischenraum zwischen der Fanglasche und der Fangtasche aufgebraucht ist. Durch die formschlüssige Verbindung und das daraus resultierende Widerstandsmoment wird verhindert, dass der Scheinwerfer den Kotflügel als ganzes nach außen und/oder nach hinten drückt, und dabei eine Deformation des Kotflügels und der Vordertür verursacht.

Nach einem zweiten Aspekt der Erfindung wird ein Scheinwerfer für ein Kraftfahrzeug nach Anspruch 9 vorgeschlagen.

Der Scheinwerfer weist dabei eine Haltevorrichtung auf, die in der Normalposition wirkungsfrei zur Karosserie ausgebildet ist.

In einer Crashposition, d.h. nach einem Zusammenprall des Fahrzeugs mit einem Hindernis, kommt es zwischen der Haltevorrichtung des Scheinwerfers und der Fahrzeugkarosserie zu einer haltenden Wechselwirkung.

Dieser Scheinwerfer ist eine selbständig handelbare Einheit, mit der es einerseits vorteilhaft möglich ist, ältere Kraftfahrzeuge nachzurüsten, um dadurch die vorstehend diskutierten Vorteile hinsichtlich einer Vermeidung von Schäden am Kotflügel zu erreichen. Zudem wird mit diesem Scheinwerfer erreicht, dass bei einer Reparatur des Kraftfahrzeugs nach einem Zusammenstoß mit einem Hindernis der Scheinwerfer einfach gegen ein gleichwertiges Ersatzteil ausgetauscht werden kann.

Mit dem erfindungsgemäßen Scheinwerfer lassen sich zudem die vorstehend bezüglich des Kraftfahrzeugs diskutierten Vorteile in ungeschmälerter Weise erreichen, so dass diesbezüglich auf die vorstehende Diskussion verwiesen wird. Entsprechende Weiterbildungen sind dabei ebenso möglich.

Die vorstehend beschriebene Erfindung wird nachfolgend anhand einer exemplarischen Ausführungsform unter Bezugnahme auf die Zeichnungen detaillierter beschrieben. Dabei zeigt:
- Fig. 1: eine schematische Darstellung des erfindungsgemäßen Befestigungssystems in der Normalposition;
- Fig. 2: eine schematische Darstellung der Fangtasche;
- Fig. 3: eine Übersichtszeichnung des Befestigungssystems.

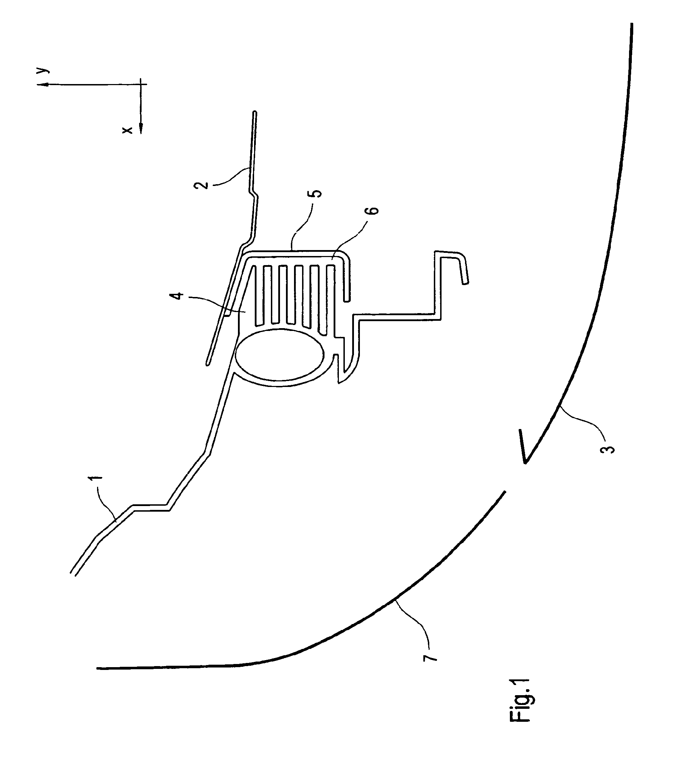

Die schematisch vereinfachte Darstellung von Fig. 1 zeigt einen Scheinwerfer 1, der derart in einem Frontbereich eines Fahrzeugs an einem Karosserieabschnitt 2 befestigt ist, dass er zwischen dem Karosserieabschnitt 2 und einem Kotflügel 3 angeordnet ist. Bei der dargestellten Ausführungsform des Befestigungssystems ist an dem Scheinwerfer 1 eine integral ausgebildete Fanglasche 4 vorgesehen, welche in eine Fangtasche 5 eingefügt ist. Die Fangtasche 5 ist dabei am Karosserieabschnitt 2 des Fahrzeugs befestigt. Zwischen der Fanglasche 4 und der Fangtasche 5 ist ein Freiraum 6 ausgebildet. Der Scheinwerfer 1 ist in Fahrzeuglängsrichtung X nach vorne mit einem als gebogene Linie stilisierten Glaskörper 7 abgedeckt.

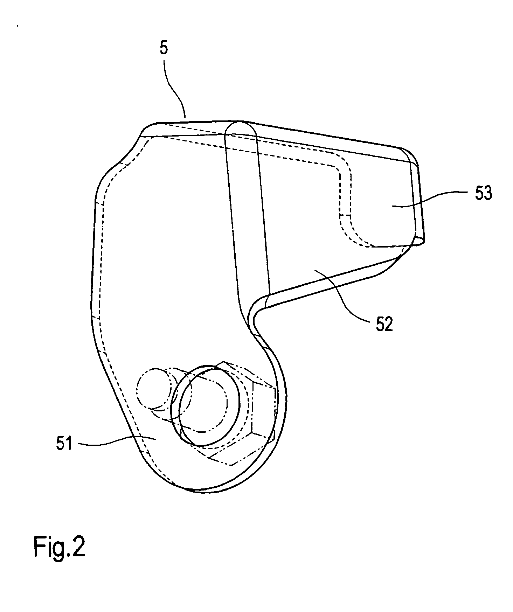

Die in Fig. 2 ebenfalls schematisch vereinfacht dargestellte Fangtasche 5 weist einen Befestigungsabschnitt 51 und einen Öffnungsabschnitt 52 mit einer an einem vorderen Ende davon ausgebildeten Öffnung 53 auf.

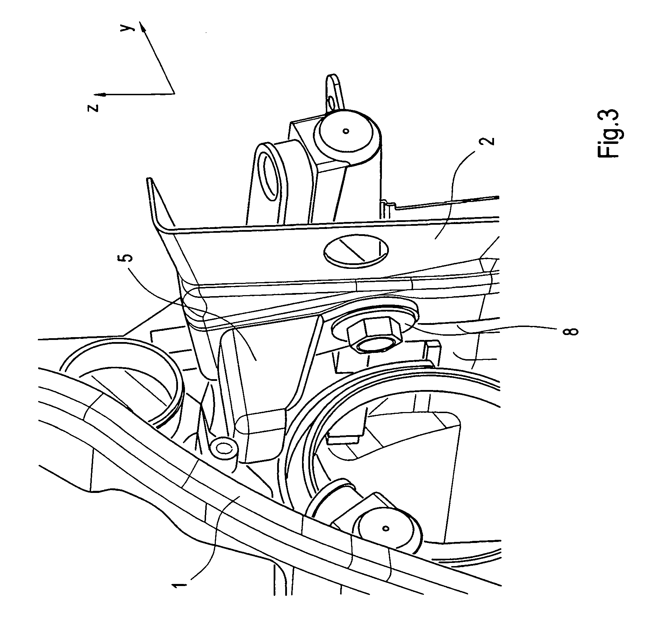

Fig. 3 zeigt eine dreidimensionale Übersichtszeichnung des Befestigungssystems in zusammengebauten Zustand in einer Ansicht von schräg hinten, aus einem Bereich zwischen der Karosserie und dem Kotflügel, wobei letzterer nicht gezeigt ist. Dabei ist der Scheinwerfer 1 z.B. in herkömmlicher Weise über die drei bekannten Montagepunkte an der Karosserie 2 befestigt. Die Fangtasche 5 wiederum ist z.B. mittels Verschraubung 7 ebenfalls mit der Karosserie verbunden, wobei außer einer Verbindung mittels Schrauben auch andere Befestigungsverfahren wie beispielsweise Schweißen, Kleben, etc. denkbar sind. Die scheinwerferseitig ausgebildete Fanglasche (in Fig. 3 nicht erkennbar) ist in dieser Darstellung in die Fangtasche 5 eingeführt und weist dort in der Normalposition einen bis zum Eintritt eines Crashereignisses verbleibenden Freiraum auf.

Mit der vorliegenden Befestigungsvorrichtung kann besonders vorteilhaft verhindert werden, dass der Scheinwerfer bei einem Crashereignis unter bzw. gegen den Kotflügel wandert, und diesen dann nach außen drückt.

### Bezugszeichenliste

- 1: Scheinwerfer
- 2: Karosserie
- 3: Kotflügel
- 4: Fanglasche
- 5: Fangtasche
- 6: Freiraum
- 7: Glaskörper
- 8: Verschraubung
- 51: Befestigungsabschnitt
- 52: Öffnungsabschnitt
- 53: Öffnung

## Patentansprüche

1. Kraftfahrzeug mit einem karosserietragenden Rahmen, Kraftfahrzeugverkleidungselementen, wie beispielsweise Kotflügel, sowie Kraftfahrzeugfunktionseinrichtungen, wie beispielsweise Scheinwerfer, wobei das Kraftfahrzeug ein Befestigungssystem für einen Frontscheinwerfer (1) aufweist, mit karosserieseitig und scheinwerferseitig interagierend ausgebildeten Haltevorrichtungen (4, 5), **dadurch gekennzeichnet, dass** die Haltevorrichtungen (4, 5) des Befestigungssystems in einer Normalposition freiliegend zueinander vorliegen und keine Haltewirkung ausüben, und dass sie in einer zusammenstoßbedingten Crashposition miteinander interagieren, um eine Haltewirkung auszuüben.

2. Kraftfahrzeug nach Anspruch 1, **dadurch gekennzeichnet, dass** die scheinwerferseitig ausgebildete Haltevorrichtung eine Fanglasche (4) ist.

3. Kraftfahrzeug nach Anspruch 2, **dadurch gekennzeichnet, dass** die Fanglasche (4) integral am Gehäuse des Scheinwerfers (1) ausgebildet ist.

4. Kraftfahrzeug nach Anspruch 1, **dadurch gekennzeichnet, dass** die karosserieseitig ausgebildete Haltevorrichtung eine Fangtasche (5) ist.

5. Kraftfahrzeug nach Anspruch 4, **dadurch gekennzeichnet, dass** die Fangtasche (5) seitlich an der Frontkarosserie (2) ausgebildet ist.

6. Kraftfahrzeug nach Anspruch 1 bis 5, **dadurch gekennzeichnet, dass** die Fangtasche (5) und die Fanglasche (4) entlang einer Längsrichtung des Fahrzeugs angeordnet sind.

7. Kraftfahrzeug nach Anspruch 6, **dadurch gekennzeichnet, dass** das Befestigungssystem derart ausgebildet ist, dass in einer Normalposition zwischen der Fanglasche (4) und der Fangtasche (5) ein Freiraum (6) vorhanden ist.

8. Kraftfahrzeug nach Anspruch 7, **dadurch gekennzeichnet, dass** das Befestigungssystem derart ausgebildet ist, dass der zwischen der Fanglasche (4) und der Fangtasche (5) vorhandene Freiraum (6) beim Zusammenprall des Kraftfahrzeugs mit einem Hindernis aufgebraucht wird, wodurch eine formschlüssige Verbindung zwischen Fangtasche (5) und Fanglasche (4) entsteht.

9. Scheinwerfer für ein Kraftfahrzeug, insbesondere nach einem der Ansprüche 1 bis 8, **dadurch gekennzeichnet, dass** der Scheinwerfer (1) eine Haltevorrichtung (4, 5) aufweist, die in einer Normalposition freiliegend zur Karosserie (2) ausgebildet ist und in dieser Normalposition keine Haltewirkung ausübt, und die in einer zusammenstoßbedingten Crashposition mit der Karosserie (2) interagiert, um eine Haltewirkung auszuüben.

10. Scheinwerfer nach Anspruch 9, **dadurch gekennzeichnet, dass** die Haltevorrichtung eine Fanglasche (4) ist, wobei die Fanglasche (4) vorzugsweise integral am Gehäuse des Scheinwerfers (1) ausgebildet ist.

## Claims

1. Motor vehicle with a body-supporting frame, motor vehicle panelling elements such as wing elements, for example, as well as motor vehicle function devices such as headlights, for example, wherein the motor vehicle has a fastening system for a front headlight (1), with holding devices (4, 5) configured to interact on the body side and on the headlight side, **characterised in that** in a normal position the holding devices (4, 5) of the fastening system are arranged to lie free relative to one another and do not perform a holding action, and that in a crash position caused by a collision they interact with one another to perform a holding action.

2. Motor vehicle according to claim 1, **characterised in that** the holding device configured on the headlight side is a catch tongue (4).

3. Motor vehicle according to claim 2, **characterised in that** the catch tongue (4) is configured integrally on the housing of the headlight (1).

4. Motor vehicle according to claim 1, **characterised in that** the holding device configured on the body side is a catch socket (5).

5. Motor vehicle according to claim 4, **characterised in that** the catch socket (5) is configured laterally on the front body (2).

6. Motor vehicle according to claim 1 to 5, **characterised in that** the catch socket (5) and the catch tongue (4) are arranged in a longitudinal direction of the vehicle.

7. Motor vehicle according to claim 6, **characterised in that** the fastening system is configured such that in a normal position a free space (6) is provided between the catch tongue (4) and the catch socket (5).

8. Motor vehicle according to claim 7, **characterised in that** the fastening system is configured such that in the event of a collision of the motor vehicle with an obstacle, the free space (6) provided between the catch tongue (4) and the catch socket (5) is used-up, as a result of which a positive-locking connection between the catch socket (5) and catch tongue (4) is formed.

9. Headlight for a motor vehicle, in particular according to one of claims 1 to 8, **characterised in that** the headlight (1) has a holding device (4, 5), which in a normal position is configured to lie free relative to the body (2) and does not perform a holding action in this normal position, and which in a crash position caused by a collision interacts with the body (2) to perform a holding action.

10. Headlight according to claim 9, **characterised in that** the holding device is a catch tongue (4), wherein the catch tongue (4) is preferably configured to be integral to the housing of the headlight (1).

## Revendications

1. Véhicule ayant un châssis supportant la carrosserie, des éléments d'habillage du véhicule, comme par exemple des ailes, ainsi que des dispositifs fonctionnels du véhicule, comme par exemple des phares, lequel véhicule présente un système de fixation pour un phare avant (1) comprenant des dispositifs de retenue réalisés en interaction du côté de la carrosserie et du côté du phare (4, 5), **caractérisé en ce que**, dans une position normale, les dispositifs de retenue (4, 5) du système de fixation sont situés librement l'un par rapport à l'autre et n'exercent aucune fonction de retenue et, dans une position de crash provoquée par une collision, ils interagissent de manière à exercer une fonction de retenue.

2. Véhicule selon la revendication 1, **caractérisé en ce que** le dispositif de retenue réalisé du côté du phare est un collier d'attache (4).

3. Véhicule selon la revendication 2, **caractérisé en ce que** le collier d'attache (4) est réalisé d'une seule pièce sur le logement du phare (1).

4. Véhicule selon la revendication 1, **caractérisé en ce que** le dispositif de retenue réalisé du côté de la carrosserie est une poche d'attache (5).

5. Véhicule selon la revendication 4, **caractérisé en ce que** la poche d'attache (5) est réalisée latéralement sur la carrosserie avant (2).

6. Véhicule selon les revendications 1 à 5, **caractérisé en ce que** la poche d'attache (5) et le collier d'attache (4) sont agencés le long d'une direction longitudinale du véhicule.

7. Véhicule selon la revendication 6, **caractérisé en ce que** le système de fixation est réalisé de telle sorte que, dans une position normale, il existe un espace libre (6) entre le collier d'attache (4) et la poche d'attache (5).

8. Véhicule selon la revendication 7, **caractérisé en ce que** le système de fixation est réalisé de telle sorte que l'espace libre (6) disponible entre le collier d'attache (4) et la poche d'attache (5) est utilisé lors d'une collision du véhicule avec un obstacle, ce par quoi il se produit une liaison à correspondance de forme entre la poche d'attache (5) et le collier d'attache (4).

9. Phare pour véhicule, en particulier selon l'une des revendications 1 à 8, **caractérisé en ce que** le phare (1) présente un dispositif de retenue (4, 5) qui, dans une position normale, est réalisé de façon à reposer librement sur la carrosserie (2) et n'exerce dans cette position normale aucune fonction de retenue et qui, dans une position de crash provoquée par une collision, interagit avec la carrosserie (2) de manière à exercer une fonction de retenue.

10. Phare selon la revendication 9, **caractérisé en ce que** le dispositif de retenue est un collier d'attache (4), le collier d'attache (4) étant de préférence réalisé d'une seule pièce sur le logement du phare (1).
